(19) Europäisches Patentamt
European Patent Office
Office européen des brevets

(11) **EP 3 522 276 A1**

(12) **EUROPEAN PATENT APPLICATION**
published in accordance with Art. 153(4) EPC

(43) Date of publication:
**07.08.2019 Bulletin 2019/32**

(51) Int Cl.:
**H01M 4/96** *(2006.01)*        **H01M 8/16** *(2006.01)*

(21) Application number: **16917617.9**

(22) Date of filing: **30.09.2016**

(86) International application number:
**PCT/JP2016/004430**

(87) International publication number:
**WO 2018/061063 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Panasonic Corporation**
**Kadoma-shi, Osaka 571-8501 (JP)**

(72) Inventors:
• **KAMAI, Ryo**
**Osaka-shi**
**Osaka 540-6207 (JP)**

• **YOSHIKAWA, Naoki**
**Osaka-shi**
**Osaka 540-6207 (JP)**
• **KITADE, Yuuki**
**Osaka-shi**
**Osaka 540-6207 (JP)**

(74) Representative: **Müller-Boré & Partner**
**Patentanwälte PartG mbB**
**Friedenheimer Brücke 21**
**80639 München (DE)**

(54) **CARBON-BASED MATERIAL, ELECTRODE PROVIDED WITH SAME AND MICROBIAL FUEL CELL**

(57)     A carbon-based material (10) includes an expanded graphite sheet (1) including expanded graphite grains (2). The carbon-based material also includes nonmetal atoms or nonmetal ions of a nonmetallic element of either nitrogen or sulfur, and surfaces of the expanded graphite grains are doped with the nonmetal atoms or the nonmetal ions. The carbon-based material also includes metal atoms or metal ions of at least one metallic element selected from the element group of group 8 to group 11 of the periodic table, and the surfaces of the expanded graphite grains are doped with the metal atoms or the metal ions. An electrode includes the carbon-based material, and a microbial fuel cell includes the electrode.

FIG. 1

**Description**

TECHNICAL FIELD

The present invention relates to a carbon-based material, and an electrode and a microbial fuel cell including the carbon-based material. More particularly, the present invention relates to a carbon-based material having high catalytic activity that is easy to manufacture, and an electrode and a microbial fuel cell including the carbon-based material.

BACKGROUND ART

An oxygen reduction reaction shown below is a positive electrode reaction induced in $H_2/O_2$ fuel cells and brine electrolysis, for example, and plays an important role in electrochemical energy conversion devices and the like.

$$O_2 + 4H^+ + 4e^- \rightarrow 2H_2O$$

An oxygen evolution reaction shown below, which is a reverse reaction of the oxygen reduction reaction, plays an important role as a negative electrode reaction induced in water electrolysis and the like.

$$2H_2O \rightarrow O_2 + 4H^+ + 4e^-$$

In order to promote the oxygen reduction reaction or the oxygen evolution reaction in various kinds of devices, noble metal such as platinum, ruthenium oxide, and iridium oxide has been widely and commonly used as a catalyst. For example, Patent Literature 1 discloses a method of manufacturing a polymer electrolyte fuel cell using a metal-supporting catalyst supporting particles of metal selected from the group consisting of platinum group metal and a platinum group alloy on a carbon black support. Patent Literature 1 also discloses that a solid matter including the catalyst and fluorine-containing ion-exchange resin is pulverized, and the powder thus obtained is fixed to a gas diffusion layer formed of carbon cloth, for example.

CITATION LIST

PATENT LITERATURE

Patent Literature 1: Japanese Unexamined Patent Application Publication No. 2002-184414

SUMMARY OF INVENTION

When the catalyst is in a particle state, as disclosed in Patent Literature 1, an additional step of fixing the catalyst to the gas diffusion layer, for example, is inevitably required. To fix the catalyst to a member such as the gas diffusion layer, a binder such as fluorine-containing ion-exchange resin is also necessary. However, the binder is gradually degraded by oxygen radical species generated by an electrode reaction, for example, when a gas diffusion electrode is used for a long period of time. Accordingly, the degradation leads to deterioration of the gas diffusion electrode with the passage of time.

The present invention has been made in view of the above-described conventional problems. An object of the present invention is to provide a carbon-based material having high catalytic activity that is easy to manufacture with time-course deterioration suppressed, and an electrode and a microbial fuel cell including the carbon-based material.

In order to solve the problems described above, a carbon-based material according to a first aspect of the present invention includes an expanded graphite sheet including expanded graphite grains. The carbon-based material also includes nonmetal atoms or nonmetal ions of a nonmetallic element of either nitrogen or sulfur, and surfaces of the expanded graphite grains are doped with the nonmetal atoms or the nonmetal ions. The carbon-based material also includes metal atoms or metal ions of at least one metallic element selected from the element group of group 8 to group 11 of the periodic table, and the surfaces of the expanded graphite grains are doped with the metal atoms or the metal ions.

A carbon-based material according to a second aspect of the present invention includes an expanded graphite sheet including expanded graphite grains. The carbon-based material also includes a compound including nonmetal atoms or nonmetal ions of a nonmetallic element of either nitrogen or sulfur, and metal atoms or metal ions of at least one metallic element selected from the element group of group 8 to group 11 of the periodic table. The compound is supported on surfaces of the expanded graphite grains.

An electrode according to a third aspect of the present invention includes the carbon-based material.

A microbial fuel cell according to a fourth aspect of the present invention includes the electrode.

BRIEF DESCRIPTION OF DRAWINGS

Fig. 1 is a schematic cross-sectional view showing a carbon-based material according to an embodiment of the present invention.

Fig. 2 is a schematic view showing a fuel cell according to the embodiment of the present invention.

Fig. 3 is a graph showing a measurement result by linear sweep voltammetry in a gas diffusion electrode of Example 1.

Fig. 4 is a graph showing a measurement result by linear sweep voltammetry in a gas diffusion electrode of Example 2.

Fig. 5 is a graph showing a measurement result by linear sweep voltammetry in a gas diffusion electrode of Example 3.

Fig. 6 is a graph showing a measurement result by linear sweep voltammetry in a gas diffusion electrode of Example 4.

Fig. 7 is a graph showing a measurement result by linear sweep voltammetry in a gas diffusion electrode of Comparative Example 1.

Fig. 8 is a graph showing a measurement result by linear sweep voltammetry in a gas diffusion electrode of Comparative Example 2.

Fig. 9 is a graph showing measurement results by linear sweep voltammetry in the gas diffusion electrodes of Example 1, Comparative Example 1, and Comparative Example 2.

Fig. 10 is a view showing a model structure used for calculating oxygen reduction activity by density functional theory.

Fig. 11 is a graph showing results of calculation using the model structure shown in Fig. 10.

DESCRIPTION OF EMBODIMENTS

Hereinafter, a carbon-based material, and an electrode and a microbial fuel cell including the carbon-based material according to the present embodiment will be described with reference to the drawings. The dimensions of elements in the drawings may be exaggerated for illustration purposes, and are not necessarily drawn to scale.

[Carbon-based material]

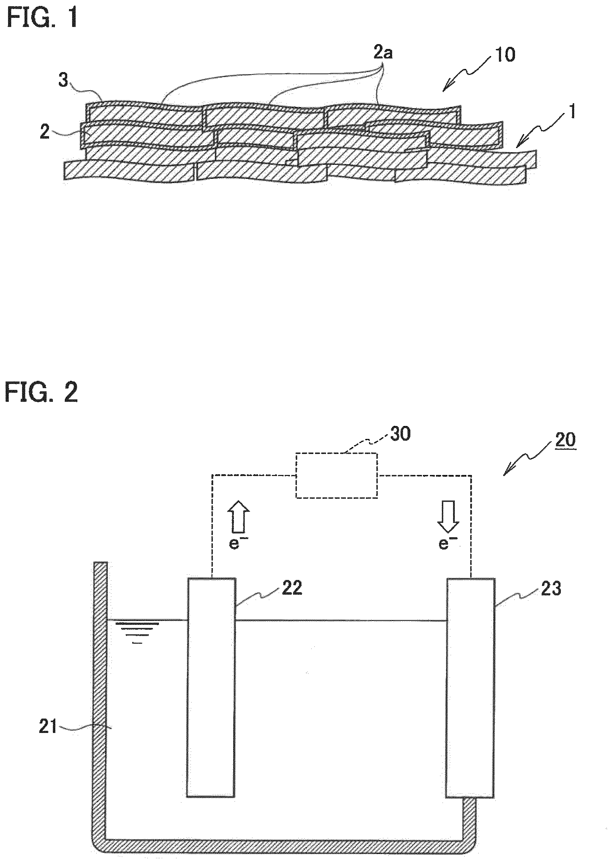

A carbon-based material 10 according to the present embodiment includes an expanded graphite sheet 1 composed of expanded graphite grains 2, as shown in Fig. 1. The carbon-based material 10 also includes nonmetal atoms or nonmetal ions of a nonmetallic element of either nitrogen or sulfur, and metal atoms or metal ions of at least one metallic element selected from the element group of group 8 to group 11 of the periodic table, the nonmetal atoms or the nonmetal ions and the metal atoms or the metal ions being present on surfaces of the expanded graphite grains 2. The nonmetal atoms or the nonmetal ions and the metal atoms or the metal ions, which are present on the surfaces of the expanded graphite grains 2, form active layers 3 which promote an oxygen reduction reaction, for example.

The expanded graphite sheet is obtained as follows, for example. First, natural graphite is subjected to chemical treatment with acid so as to provide inserts between graphene layers of the graphite. Subsequently, the graphene layers provided with the inserts are rapidly heated at a high temperature, so as to obtain expanded graphite in which gaps between the graphene layers are expanded by gas pressure due to thermal decomposition of the inserts between the graphene layers. Thereafter, the expanded graphite is pressed and rolled, so as to obtain the expanded graphite sheet. As shown in Fig. 1, the expanded graphite sheet thus obtained has a structure in which the flat expanded graphite grains 2 are arranged in a plane direction of the expanded graphite sheet 1. Since electrical conductivity in the plane direction of the expanded graphite sheet 1 is high, the electrical conductivity between the carbon-based material and an external circuit is also improved, so as to enhance efficiency of a battery reaction. The expanded graphite sheet 1 has flexibility due to voids provided between layers of the expanded graphite grains 2.

The expanded graphite sheet 1 preferably has electrical resistance as low as possible. As described below, when the carbon-based material 10 is used for an electrode, ohmic loss can be decreased as the electrical resistance of the expanded graphite sheet 1 is smaller. The expanded graphite sheet 1 preferably has electrical resistivity of 10 m$\Omega$·cm or less in the plane direction and 10 $\Omega$·cm or less in the thickness direction. The electrical resistivity may be measured by a four-point probe method, for example.

The expanded graphite sheet 1 preferably has a density in a range of 0.05 g/cm$^3$ to 10 g/cm$^3$. The expanded graphite sheet 1 having a density outside the above range may also achieve the effects of the present embodiment. However, when the density of the expanded graphite sheet 1 is less than 0.05 g/cm$^3$, the flexibility is decreased exceedingly, which may prevent the shape of the sheet from remaining as it is. When the density of the expanded graphite sheet 1 exceeds 10 g/cm$^3$, gas permeability of the expanded graphite sheet 1 decreases in the thickness direction, which may decrease the catalytic activity of the carbon-based material.

The active layers 3 present on the surfaces of the expanded graphite grains 2 may be provided along the entire circumference of the expanded graphite grains 2 included in the expanded graphite sheet 1, or may be provided on part of the surfaces of the expanded graphite grains 2. Alternatively, the active layers 3 may be provided only at surface exposed portions 2a of the expanded graphite grains 2 present on the outermost surface of the expanded graphite sheet 1.

The surfaces of the expanded graphite grains 2 included in the carbon-based material 10 are preferably doped with the nonmetal atoms or the nonmetal ions and the metal atoms or the metal ions. The active layers 3 are thus preferably formed such that the surfaces of the expanded graphite grains 2 are doped with the nonmetal atoms or the nonmetal ions and the metal atoms or the metal ions.

As used herein, the expression "the surfaces of the expanded graphite grains are doped with the nonmetal atoms or the nonmetal ions" refers to a state in which atoms constituting the expanded graphite grains are chemically bonded with the nonmetal atoms or the nonmetal ions. In particular, the nonmetal atoms or the nonmetal ions are preferably inserted into a carbon lattice in the expanded graphite grains. More particular, at least one carbon in the carbon lattice obtained such that $sp^2$ carbon is sequentially bonded is preferably replaced with dopant atoms consisting of a nonmetallic element (nonmetal atoms or nonmetal ions).

As described above, the active layers 3 may be provided along the entire circumference of the expanded graphite grains 2, or may be provided on part of the surfaces of the expanded graphite grains 2. Alternatively, the active layers 3 may be provided only at the surface exposed portions 2a of the expanded graphite grains 2. Namely, according to the present embodiment, part of the expanded graphite grains 2 present on the outermost surface of the expanded graphite sheet 1 may be doped with the nonmetal atoms or the nonmetal ions and the metal atoms or the metal ions, or the entire surfaces of the expanded graphite grains 2 included in the expanded graphite sheet 1 may be doped with the nonmetal atoms or the nonmetal ions and the metal atoms or the metal ions. The catalytic activity due to the active layers 3 can be optimized when the expanded graphite sheet 1 is doped, at appropriate portions, with the nonmetal atoms or the nonmetal ions and the metal atoms or the metal ions forming the active layers 3.

The doping of the expanded graphite grains 2 with the nonmetal atoms or the nonmetal ions can be confirmed by Raman spectroscopy, for example. In particular, a peak of a G band derived from a bond by an sp2 orbital of carbon in a Raman spectrum obtained by the Raman spectroscopy and a peak of a D band derived from defect of the bond by the sp2 orbital of carbon are confirmed in the carbon-based material. A ratio (Id/Ig) of the intensity of the peak of the D band (Id) to the intensity of the peak of the G band (Ig) increases when the carbon-based material is doped with a different element. Therefore, the carbon-based material can be determined to be doped with a different element when the ratio of the intensities (Id/Ig) is large, as compared with a case in which the carbon-based material is not doped with the nonmetal atoms or the nonmetal ions.

The doping of the expanded graphite grains 2 with the nonmetal atoms or the nonmetal ions can also be confirmed by X-ray photoelectron spectroscopy (XPS). In particular, the carbon-based material can be determined to be doped with a different element according to a peak position derived from the nonmetal atoms or the nonmetal ions with which the carbon-based material is doped, in a binding energy spectrum obtained by the XPS. Such a peak position used may be a peak position derived from 1s orbital electrons of nitrogen atoms, for example. When the nonmetal atoms are nitrogen, the presence of nitrogen inserted in the carbon lattice can be confirmed when the peak derived from the 1s orbital electrons of nitrogen in the binding energy spectrum is located at 399.9 eV.

As used herein, the expression "the surfaces of the expanded graphite grains are doped with the metal atoms or the metal ions" refers to a state in which atoms constituting the expanded graphite grains are chemically bonded with the metal atoms or the metal ions. In particular, the metal atoms or the metal ions are preferably bonded, by coordinate bonding or ion bonding, to the nonmetal atoms or the nonmetal ions with which the expanded graphite grains are doped. The metal atoms or the metal ions with which the expanded graphite grains are doped are not necessarily bonded directly to the carbon atoms constituting the expanded graphite grains.

The doping of the expanded graphite grains 2 with the metal atoms or the metal ions can be confirmed by a K-edge extended X-ray absorption fine structure (EXAFS), for example. In particular, with regard to the carbon-based material, a peak is determined whether to appear around a distance of coordinate bonding (or ion bonding) between the metal atoms and the nonmetal atoms in a radial distribution function obtained such that the EXAFS of the metal atoms or the metal ions of metal excluding Pt, Ir, and Os is subjected to Fourier transform. The presence of the coordinate bonding or the ion bonding between the nonmetal atoms or the nonmetal ions and the metal atoms or the metal ions can be confirmed when such a peak appears. With regard to Pt, Ir, or Os, a peak is determined whether to appear around a distance of coordinate bonding (or ion bonding) between the metal atoms and the nonmetal atoms in a radial distribution function obtained such that an LIII-edge EXAFS of the metal atoms or the metal ions is subjected to Fourier transform. The presence of the coordinate bonding or the ion bonding between the nonmetal atoms or the nonmetal ions and the metal atoms or the metal ions can be confirmed when such a peak appears.

The EXAFS is described below. The EXAFS is a fine structure of a spectrum which appears on the higher energy side by approximately 100 eV or greater than an X-ray absorption edge in an X-ray absorption fine structure (XAFS) spectrum. An absorption near edge structure in the XAFS spectrum is called an X-ray absorption near edge structure (XANES).

Typically, a vibrational component of the EXAFS (vibrational intensity of an absorption spectrum vibrating with a wave number k of X-ray electrons) $\chi(k)$ is represented by the following formula.

[Math. 1]

$$\chi(\mathrm{k}) = \sum_i \frac{A_i}{R_i} \exp(-2k^2\sigma i^2)\exp(-2R_i/\lambda)\sin(2kR_i + \delta_i)f_i(\pi)$$

In the formula, *Ri* represents a distance from absorption atoms to the i-th scattering atoms, *Ai* represents the number of the *i*-th scattering atoms, and $\sigma i$ represents a mean square amplitude in thermal vibration in the *i*-th scattering atoms. Further, $\lambda$ represents a mean free path of photoelectrons, $\delta i$ represents a phase shift by scattering in the *i*-th scattering atoms, and *fi*($\pi$) represents an atomic scattering factor backscattered at a scattering angle of 180° in the *i*-th scattering atoms. The radial distribution function can be obtained such that the component $\chi(k)$ is subjected to Fourier transform.

When the K-edge EXAFS spectrum is measured with regard to the metal atoms of the carbon-based material 10, the object to be measured is only the carbon-based material 10. Other substances present independently of the carbon-based material 10, such as substances mixed in or adhering to the carbon-based material 10, are excluded from the object to be measured. Therefore, the content of substances present independently of the carbon-based material 10 is required to sufficiently be reduced such that the carbon-based material 10 is preliminarily washed with an acidic aqueous solution when the K-edge EXAFS spectrum is measured with regard to the metal atoms of the carbon-based material 10.

The method of obtaining the EXAFS and the radial distribution function is described in more detail below. The XAFS spectrum is measured by permeametry by use of an ion chamber detector, for example. The measurement of the spectrum requires preliminary calibration of an energy axis per measurement. The calibration of the energy axis is implemented, for example, such that a value of a local maximum at the first peak is set to 8980.3 eV in a graph in which energy is defined as the X axis and absorbance is defined as the Y axis with regard to a Cu K-edge XANES of Cu metal.

The radial distribution function is led from the XAFS spectrum data by the following method. First, background noise is deducted from the XAFS spectrum data by a common method. Next, a baseline is determined at which an intensity axis is zero such that a mean intensity in the range of -150 eV to -30 eV results in zero on the basis of absorption edge energy (E0). In addition, a baseline is determined at which an intensity axis is one such that a mean intensity in the range of +150 eV to +550 eV results in one. The two baselines are determined such that the absorption edge energy (E0) is located in the middle of the two baselines on a rising spectrum adjacent to the absorption edge energy (E0). Subsequently, the two baselines are replaced by straight lines to adjust the waveforms. These operations cause the energy (unit: eV) axis to be replaced with a wave number (k, unit: 1/Å) axis, so as to extract the vibration component $\chi(k)$ of the EXAFS represented by the formula described above.

Thereafter, the spectrum obtained by the operations described above is multiplied by the cube of k, and is then subjected to Fourier transform. The range of k subjected to Fourier transform is set to 2.5 to 11.5 (1/Å). Accordingly, the radial distribution function is obtained in which the intensity is defined as the Y axis and the distance Ri between the atoms is defined as the X axis. The presence of the coordinate bonding or the ion bonding between the nonmetal atoms or the nonmetal ions and the metal atoms or the metal ions can be confirmed from the peak appearing around the distance of the coordinate bonding (or the ion bonding) between the metal atoms and the nonmetal atoms in the radial distribution function.

When the metal atoms or the metal ions are metal excluding Pt, Ir, and Os, the intensity at the maximum peak appearing around the distance of the metal bonding between the metal atoms or the metal ions in the radial distribution function obtained such that the EXAFS of the metal atoms or the metal ions is subjected to Fourier transform, is defined as intensity B. The intensity at the maximum peak appearing around the distance of the coordinate bonding (or the ion bonding) between the metal atoms or the metal ions and the nonmetal atoms or the nonmetal ions, is defined as intensity A. A ratio A/B of the intensity A to the intensity B is preferably 4.0 or greater. When the ratio A/B of the intensity A to the intensity B is 4.0 or greater, a proportion of a compound corresponding to impurities such as metal carbide is decreased, so as to enhance the catalytic activity of the electrode without impairing the catalytic reaction.

When the metal atoms or the metal ions are metal of Pt, Ir, or Os, the intensity at the maximum peak appearing around the distance of the metal bonding between the metal atoms or the metal ions in the radial distribution function obtained such that the LIII-edge EXAFS of the metal atoms or the metal ions is subjected to Fourier transform, is defined as intensity B. The intensity at the maximum peak appearing around the distance of the coordinate bonding (or the ion bonding) between the metal atoms or the metal ions and the nonmetal atoms or the nonmetal ions, is defined as intensity A. A ratio A/B of the intensity A to the intensity B is preferably 4.0 or greater. As in the case described above, when the ratio A/B of the intensity A to the intensity B is 4.0 or greater, a proportion of a compound corresponding to impurities such as metal carbide is decreased, so as to enhance the catalytic activity of the electrode.

The doping of the expanded graphite grains 2 with the metal atoms or the metal ions can also be confirmed by an X-ray absorption spectrum (XAS). In particular, a position is measured at an absorption peak derived from exciting, to an unoccupied orbital, inner-shell electrons (for example, 1s orbital electrons in the case of nitrogen atoms) of the nonmetal atoms or the nonmetal ions in the XAS obtained for the carbon-based material. In addition, a position is measured at an absorption peak derived from exciting, to an unoccupied orbital, inner-shell electrons (for example, 2p orbital electrons in the case of iron atoms) of the metal atoms or the metal ions. Subsequently, each position at the absorption peak is determined whether to be shifted from a peak position at which no coordinate bonding or ion bonding is present, and the respective positions are determined whether to be shifted in different directions. Accordingly, the presence of the coordinate bonding or the ion bonding of the nonmetal atoms or the nonmetal ions and the metal atoms or the metal ions can be confirmed when each position is shifted from the peak position and the respective positions are shifted in different directions. This is because the electron density of one of the nonmetal atoms and the metal atoms is increased as compared with the electron density of the other atoms due to the coordinate bonding or the ion bonding of the nonmetal atoms or the nonmetal ions and the metal atoms or the metal ions. Namely, it is because the peak of absorption energy derived from either the nonmetal atoms or the metal atoms having the higher electron density is shifted to the low-energy side, and the peak of absorption energy derived from the other atoms having the lower electron density is shifted to the high-energy side.

As described above, the carbon-based material 10 according to the present embodiment includes the nonmetal atoms or the nonmetal ions and the metal atoms or the metal ions present on the surfaces of the expanded graphite grains 2. The surfaces of the expanded graphite grains 2 are preferably doped with the nonmetal atoms or the nonmetal ions and the metal atoms or the metal ions. However, the present embodiment is not limited to this mode, and a compound including the nonmetal atoms or the nonmetal ions and the metal atoms or the metal ions may be supported on the surfaces of the expanded graphite grains 2. Namely, the active layers 3 may be formed such that a compound including the nonmetal atoms or the nonmetal ions and the metal atoms or the metal ions is supported on the surfaces of the expanded graphite grains 2.

As used herein, the expression "a compound including the nonmetal atoms or the nonmetal ions and the metal atoms or the metal ions is supported on the surfaces of the expanded graphite grains" refers to a state in which a compound including the nonmetal atoms or the nonmetal ions and the metal atoms or the metal ions adheres to the surfaces of the expanded graphite grains.

The nonmetal atoms or the nonmetal ions and the metal atoms or the metal ions may adhere to the expanded graphite grains 2 via another carbon material. For example, a carbon material may first be doped with the nonmetal atoms or the nonmetal ions and the metal atoms or the metal ions, and a compound of the carbon material thus obtained then may be caused to adhere to the surfaces of the expanded graphite grains. The nonmetal atoms or the nonmetal ions and the metal atoms or the metal ions supported via the other carbon material can also promote the oxygen reduction reaction. The carbon material is preferably, but not limited to, at least one material selected from the group consisting of carbon black, activated carbon, fullerene, carbon nanotube, carbon nanowire, graphene, and carbon fiber.

As described above, the active layers 3 may be provided along the entire circumference of the expanded graphite grains 2, or may be provided on part of the surfaces of the expanded graphite grains 2. Alternatively, the active layers 3 may be provided only at the surface exposed portions 2a of the expanded graphite grains 2. Namely, according to the present embodiment, a compound including the nonmetal atoms or the nonmetal ions and the metal atoms or the metal ions may be supported on part of the expanded graphite grains 2 present on the outermost surface of the expanded graphite sheet 1. Alternatively, a compound including the nonmetal atoms or the nonmetal ions and the metal atoms or the metal ions may be supported on the entire surfaces of the expanded graphite grains 2 included in the expanded graphite sheet 1. Supporting the compound including the nonmetal atoms or the nonmetal ions and the metal atoms or the metal ions on appropriate portions of the expanded graphite sheet 1 can optimize the catalytic activity of the active layers 3.

As described above, the carbon-based material 10 according to the present embodiment includes the nonmetal atoms or the nonmetal ions of the nonmetallic element of either nitrogen or sulfur, and the metal atoms or the metal ions of at least one metallic element selected from the element group of group 8 to group 11 of the periodic table. The metallic element may be selected from the group consisting of iron, cobalt, nickel, copper, ruthenium, rhodium, palladium, silver, osmium, iridium, platinum, and gold. The carbon-based material 10 preferably includes nitrogen atoms or nitrogen ions and iron atoms or iron ions. Namely, the carbon-based material 10 preferably includes nitrogen as a nonmetallic element and iron as a metallic element. Nitrogen and iron are easy to dope the surfaces of the expanded graphite grains, and can easily enhance the catalytic activity when nitrogen and iron are present on the surfaces of the expanded graphite grains.

Next, a method of manufacturing the carbon-based material according to the present embodiment is described below. The method of manufacturing the carbon-based material according to the present embodiment may be any method which can cause the nonmetal atoms or the nonmetal ions and the metal atoms or the metal ions to be present on the surfaces of the expanded graphite grains 2 included in the expanded graphite sheet 1.

The carbon-based material, in which the surfaces of the expanded graphite grains 2 are doped with the nonmetal atoms or the nonmetal ions and the metal atoms or the metal ions, may be manufactured as follows. First, a dispersion solution or a complex solution including at least one of nonmetal atoms or nonmetal ions and at least one of metal atoms or metal ions is prepared, and the solution thus prepared is applied to the surface of the expanded graphite sheet 1. The expanded graphite sheet 1, to which the solution is applied, is then baked at a high temperature in a range of 800 °C to 1000 °C for a short period of time in a range of several tens of seconds to several minutes in an inert gas atmosphere, and is washed with an acid solution such as sulfuric acid. Accordingly, the surfaces of the expanded graphite grains 2 can be doped with the nonmetal atoms or the nonmetal ions and the metal atoms or the metal ions.

The dispersion solution or the complex solution may include a compound including nonmetal atoms and metal atoms coordinated with the nonmetal atoms, and in particular preferably includes a complex including nonmetal atoms and metal atoms coordinated with the nonmetal atoms. The compound preferably further includes at least either a porphyrin ring or a phthalocyanine ring. Examples of such compounds include an iron-protoporphyrin IX complex, a cobalt-protoporphyrin IX complex, a benzyl disulfide-copper complex, a phthalocyanine iron(II) complex, and an iron-pentaethylenehexamine complex solution.

The carbon-based material, in which part of the expanded graphite grains 2 present on the outermost surface of the expanded graphite sheet 1 is doped with the nonmetal atoms or the nonmetal ions and the metal atoms or the metal ions, may be manufactured as follows. First, a dispersion solution or a complex solution including at least one of nonmetal atoms and nonmetal ions and at least one of metal atoms and metal ions is prepared such that the viscosity of the solution is set to 10,000 mPa·s or greater. The solution thus obtained is applied to the surface of the expanded graphite sheet 1. The expanded graphite sheet 1 to which the solution is applied is then baked at a high temperature in a range of 800 °C to 1000 °C for a short period of time in a range of several tens of seconds to several minutes in an inert gas atmosphere, and is washed with an acid solution such as sulfuric acid. Accordingly, the surface exposed portions 2a of the expanded graphite grains 2 present on the outermost surface of the expanded graphite sheet 1 can be doped with the nonmetal atoms or the nonmetal ions and the metal atoms or the metal ions.

The carbon-based material, in which the entire surfaces of the expanded graphite grains 2 included in the expanded graphite sheet 1 are doped with the nonmetal atoms or the nonmetal ions and the metal atoms or the metal ions, may be manufactured as follows. First, a dispersion solution or a complex solution including at least one of nonmetal atoms and nonmetal ions and at least one of metal atoms and metal ions is prepared such that the viscosity of the solution is set to 100 mPa·s or lower. The expanded graphite sheet 1 is then soaked in and impregnated with the solution thus prepared. Subsequently, the solvent is removed so that at least one of the nonmetal atoms or the nonmetal ions and at least one of the metal atoms or the metal ions adhere to the surfaces of the expanded graphite grains. The expanded graphite sheet to which these atoms or the ions adhere is then baked at a high temperature in a range of 800 °C to 1000 °C for a short period of time in a range of several tens of seconds to several minutes in an inert gas atmosphere, and is washed with an acid solution such as sulfuric acid. Accordingly, the entire surfaces of the expanded graphite grains 2 can be doped with the nonmetal atoms or the nonmetal ions and the metal atoms or the metal ions.

The carbon-based material, in which a compound including the nonmetal atoms or the nonmetal ions and the metal atoms or the metal ions is supported on the surfaces of the expanded graphite grains 2, may be manufactured as follows. First, a polymer solution including at least one of nonmetal atoms or nonmetal ions and at least one of metal atoms or metal ions is prepared, and the solution thus prepared is applied to the surface of the expanded graphite sheet 1. The expanded graphite sheet 1 to which the solution is applied is then baked at a temperature in a range of 600 °C to 1000 °C for 30 minutes to several hours in an inert gas atmosphere, and is washed with an acid solution such as sulfuric acid. Accordingly, the compound including the nonmetal atoms or the nonmetal ions and the metal atoms or the metal ions can be supported on the surfaces of the expanded graphite grains 2.

The carbon-based material, in which a compound including the nonmetal atoms or the nonmetal ions and the metal atoms or the metal ions is supported on part of the expanded graphite grains 2 present on the outermost surface of the expanded graphite sheet 1, may be manufactured as follows. First, a polymer solution including at least one of nonmetal atoms or nonmetal ions and at least one of metal atoms or metal ions is prepared such that the viscosity of the solution is set to 10,000 mPa·s or greater. The solution thus obtained is applied to the surface of the expanded graphite sheet 1. The expanded graphite sheet 1, to which the solution is applied, is then baked at a temperature in a range of 600 °C to 1000 °C for 30 minutes to several hours in an inert gas atmosphere, and is washed with an acid solution such as sulfuric acid. Accordingly, the compound including the nonmetal atoms or the nonmetal ions and the metal atoms or the metal ions can be supported on the expanded graphite grains 2 present on the outermost surface of the expanded graphite sheet 1.

The carbon-based material, in which a compound including the nonmetal atoms or the nonmetal ions and the metal atoms or the metal ions is supported on the entire surfaces of the expanded graphite grains 2 included in the expanded graphite sheet 1, may be manufactured as follows. First, a polymer solution including at least one of nonmetal atoms or nonmetal ions and at least one of metal atoms or metal ions is prepared such that the viscosity of the solution is set to 100 mPa·s or lower. The expanded graphite sheet 1 is then soaked in and impregnated with the solution thus prepared. Subsequently, the solvent is removed so that at least one of the nonmetal atoms or the nonmetal ions and at least one of the metal atoms or the metal ions adhere to the surfaces of the expanded graphite grains. The expanded graphite sheet to which these atoms or the ions adhere is then baked at a temperature in a range of 600 °C to 1000 °C for 30 minutes to several hours in an inert gas atmosphere, and is washed with an acid solution such as sulfuric acid. Accordingly, the compound including the nonmetal atoms or the nonmetal ions and the metal atoms or the metal ions can be supported on the entire surfaces of the expanded graphite grains 2 included in the expanded graphite sheet 1.

The carbon-based material, in which a compound of a carbon material doped with the nonmetal atoms or the nonmetal ions and the metal atoms or the metal ions is supported on the surfaces of the expanded graphite grains 2 included in the expanded graphite sheet 1, may be manufactured as follows. First, a dispersion solution or a complex solution including at least one of nonmetal atoms or nonmetal ions and at least one of metal atoms or metal ions is prepared, and the solution thus prepared is applied to the surface of the carbon material. As described above, the carbon material is preferably at least one material selected from the group consisting of carbon black, activated carbon, fullerene, carbon nanotube, carbon nanowire, graphene, and carbon fiber. The carbon material to which the solution is applied is then baked at a high temperature in a range of 800 °C to 1000 °C for a short period of time in a range of several tens of seconds to several minutes in an inert gas atmosphere, and is washed with an acid solution such as sulfuric acid. The compound of the carbon material doped with the nonmetal atoms or the nonmetal ions and the metal atoms or the metal ions thus can be obtained.

Thereafter, the compound of the carbon material thus obtained is mixed with the expanded graphite grains 2. The compound of the carbon material and the expanded graphite grains 2 may be mixed together by any method. At least one of a solvent, a binding agent, and a dispersant may be used during mixing of the compound of the carbon material and the expanded graphite grains 2. The solvent may be, but not limited to, at least one of water and ethanol. The binding agent may be, but not limited to, at least one material selected from the group consisting of polytetrafluoroethylene (PTFE), polyvinylidene fluoride (PVDF), and an ethylene-propylene-diene copolymer (EPDM). The dispersant may be, but not limited to, carboxymethyl cellulose (CMC).

The compound of the carbon material may be mixed with the expanded graphite grains 2 at any timing. For example, graphite grains after being subjected to chemical treatment with acid, but before expansion treatment, may be mixed with the compound, and the graphite grains then may be heated rapidly and molded by pressure. Alternatively, expanded graphite grains obtained such that graphite grains subjected to chemical treatment are heated rapidly may be mixed with the compound. Alternatively, the expanded graphite grains may be mixed with the compound during molding by pressure. Alternatively, the expanded graphite grains preliminarily mixed with the compound of the carbon material may be added during a conventional process of manufacturing an expanded graphite sheet and then molded by pressure. Alternatively, the expanded graphite sheet after molding by pressure may be impregnated with the compound of the carbon material so that the compound is mixed with the expanded graphite grains.

As described above, the carbon-based material 10 according to the present embodiment includes the expanded graphite sheet 1 including the expanded graphite grains 2. The carbon-based material 10 further includes the nonmetal atoms or the nonmetal ions of the nonmetallic element of either nitrogen or sulfur with which the surfaces of the expanded graphite grains 2 are doped. The carbon-based material 10 further includes the metal atoms or the metal ions of at least one metallic element selected from the element group of group 8 to group 11 of the periodic table, with which the surfaces of the expanded graphite grains 2 are doped.

The carbon-based material 10 according to the present embodiment includes the expanded graphite sheet 1 including the expanded graphite grains 2. The carbon-based material 10 further includes the compound including the nonmetal atoms or the nonmetal ions of the nonmetallic element of either nitrogen or sulfur and the metal atoms or the metal ions of at least one metallic element selected from the element group of group 8 to group 11 of the periodic table. The compound is supported on the surfaces of the expanded graphite grains 2.

The carbon-based material 10 according to the present embodiment does not need to include a catalyst having a granular shape supported thereon due to the expanded graphite sheet 1 and the expanded graphite grains 2, each having a surface with high catalytic activity. Since deterioration of electrode performance derived from degradation of a binder can be suppressed, the electrode can have high durability.

The expanded graphite sheet 1 has high gas permeability while barely allowing water to pass therethrough. The carbon-based material 10 according to the present embodiment thus can be used for a gas diffusion electrode, such as an electrode for a microbial fuel cell impregnated with water, without including a water-repellent layer described below. The expanded graphite sheet 1 can improve power generation performance of the fuel cell when used for the gas diffusion electrode because of high electrical conductivity in the plane direction. The carbon-based material 10 can also be deformed into any shape, such as a shape with high resistance to water pressure, since the expanded graphite sheet 1 has high flexibility.

[Electrode and microbial fuel cell]

Next, an electrode and a microbial fuel cell according to the present embodiment are described below. The electrode according to the present embodiment includes the carbon-based material described above, and the microbial fuel cell includes the electrode.

Fig. 2 is a cross-sectional view illustrating a configuration of a fuel cell 20 according to the present embodiment. Fig. 2 also illustrates an external circuit 30 to which an electric current is supplied when the external circuit 30 is connected to the fuel cell 20. The fuel cell 20 includes the carbon-based material 10 used as an electrode. The fuel cell 20 is a primary battery capable of discharging electricity, and examples thereof include a hydrogen fuel cell such as a polymer electrolyte fuel cell (PEFC) and a phosphoric acid fuel cell (PAFC), and a microbial fuel cell (MFC).

A hydrogen fuel cell obtains electric energy from hydrogen and oxygen through a reverse reaction of electrolysis of water. Such a fuel cell is known as a PEFC, a PAFC, an alkaline fuel cell (AFC), a molten carbonate fuel cell (MCFC), and a solid oxide fuel cell (SOFC), for example. The fuel cell 20 according to the present embodiment is preferably the PEFC or the PAFC. The PEFC is a fuel cell including a proton-conducting ion-exchange membrane as an electrolyte material, and the PAFC is a fuel cell including a matrix layer impregnated with phosphoric acid ($H_3PO_4$) used as an electrolyte material.

As shown in Fig. 2, the fuel cell 20 includes an electrolysis solution 21 (an electrolyte material), for example. The fuel cell 20 further includes a negative electrode 22 (a fuel electrode) and a positive electrode 23 (an air electrode). The negative electrode 22 discharges electrons to the external circuit 30 through an oxygen evolution reaction. The positive electrode 23 receives electrons flowing from the external circuit 30 through an oxygen reduction reaction.

According to the present embodiment, the positive electrode 23 is configured as a gas diffusion electrode, and includes the carbon-based material 10 as described above. In particular, the carbon-based material 10 according to the present embodiment is included in the positive electrode 23 as a gas diffusion layer and an electrode catalyst.

A gas diffusion electrode may preferably be used as an electrode for a hydrogen fuel cell and an MFC, for example. The fuel cell 20 according to the present embodiment may have a known configuration and is only required to include the positive electrode 23 serving as a gas diffusion electrode including an electrode catalyst including the carbon-based material 10. For example, the fuel cell 20 may have a configuration described in "Fuel cell Technology"; The Institute of Electrical Engineers of Japan, Special Research Committee for Next-Generation Fuel cell Power Generation System, Ohmsha, Ltd., August, 2002. The fuel cell 20 may also have a configuration described in Watanabe, K., Journal of Bioscience and Bioengineering, 2008, 106: 528-536.

The present embodiment has been illustrated with the case in which the positive electrode 23 is configured as the gas diffusion electrode and includes the carbon-based material 10, but is not limited to this case. In the fuel cell 20 according to the present embodiment, the gas diffusion electrode may be used as either the negative electrode 22 or the positive electrode 23.

For example, when the fuel cell 20 according to the present embodiment is a hydrogen fuel cell, the gas diffusion electrode including the electrode catalyst that includes the carbon-based material 10 may be used for the negative electrode 22. The electrode catalyst included in the negative electrode 22 promotes an oxidation reaction of hydrogen gas serving as fuel ($H_2 \rightarrow 2H^+ + 2e^-$), so as to donate electrons to the negative electrode 22. The gas diffusion electrode including the electrode catalyst that includes the carbon-based material 10 may also be used for the positive electrode 23. The electrode catalyst included in the positive electrode 23 promotes a reduction reaction of oxygen gas serving as an oxidizing agent ($1/2O_2 + 2H^+ + 2e^- \rightarrow H_2O$).

When the carbon-based material 10 is used for an oxygen reduction electrode catalyst, the electrode including the electrode catalyst, such as the gas diffusion electrode, is used as a positive electrode for a fuel cell, a positive electrode for a carbon dioxide permeation device, or a positive electrode for a device for brine electrolysis, for example. When the carbon-based material 10 is used for an oxygen evolution electrode catalyst, the electrode including the electrode catalyst is used as a negative electrode for a device for water electrolysis or as a negative electrode for a metal-air battery, for example.

As described above, the carbon-based material 10 according to the present embodiment uses the expanded graphite sheet having high gas permeability while barely allowing water to pass therethrough. Therefore, the carbon-based material 10 itself can be used for the gas diffusion electrode. To further enhance the durability of the electrode, a water-repellent layer having gas permeability may be used with the carbon-based material 10 bonded thereto.

When the water-repellent layer is used, the carbon-based material 10 is arranged on the side in contact with, for example, an electrolysis solution and an electrolyte film, and the water-repellent layer is arranged on the side in contact with gas such as air. The water-repellent layer may be arranged inside the sheet of the carbon-based material 10, may be arranged outside the sheet, or may be arranged both on the inside and the outside of the sheet. When the water-repellent layer is arranged outside the sheet, the water-repellent layer is preferably closer to the sheet-like carbon-based material, and more preferably in contact with the carbon-based material.

The water-repellent layer is preferably a porous material. The water-repellent layer can have both water repellency and high gas permeability when a porous material is used. Examples of materials used for the water-repellent layer include polytetrafluoroethylene (PTFE), polydimethylsiloxane (PDMS), polyethylene (PE), and polypropylene (PP). The water-repellent layer and the carbon-based material may be directly bonded together or may be bonded via an adhesive.

The adhesive preferably has high oxygen permeability. To have high oxygen permeability, the adhesive is only required to fulfill at least one of a material having voids after curing and a material having high oxygen permeability. Preferred examples of materials used for the adhesive include silicone resin, natural rubber, low-density polyethylene, polystyrene, polypropylene, polycarbonate, and polyvinyl acetate. The adhesive is not limited to the material described above, and may be any material that can fix the water-repellent layer and the carbon-based material together.

As described above, the carbon-based material 10 uses the expanded graphite sheet 1 having high gas permeability while barely allowing water to pass therethrough. Thus, the carbon-based material 10 is preferably used particularly for a gas diffusion electrode which is impregnated with water, such as an electrode for a microbial fuel cell.

A case in which the carbon-based material 10 according to the present embodiment is used for the positive electrode 23 in the microbial fuel cell is described below. As shown in Fig. 2, the fuel cell (the microbial fuel cell) 20 includes the negative electrode 22 and the positive electrode 23. The fuel cell 20 has a structure in which the negative electrode 22 is impregnated with the electrolysis solution 21, and the positive electrode 23 on one surface is exposed to a gas phase.

The negative electrode 22 has a thin-plate shape, and a material thereof is preferably at least one of carbon and platinum, for example. The negative electrode 22 holds anaerobic microorganisms. In particular, a biofilm including anaerobic microorganisms is placed and fixed onto a surface of the negative electrode 22 so that the anaerobic microorganisms are held by the negative electrode 22. A typical biofilm has a three-dimensional structure including a microbial population and an extracellular polymeric substance (EPS) that the microbial population produces. The anaerobic microorganisms are not necessarily held by the negative electrode 22 via the biofilm.

The anaerobic microorganisms held by the negative electrode 22 are preferably electricity-producing bacteria having, for example, an extracellular electron transfer mechanism. Specific examples of anaerobic microorganisms include Geobacter, Shewanella, Aeromonas, Geothrix, and Saccharomyces.

The positive electrode 23 may be the gas diffusion electrode including the carbon-based material 10 described above. The carbon-based material 10 includes the expanded graphite sheet and thus has high gas permeability while barely allowing water to pass therethrough. In addition, the nonmetal atoms or the nonmetal ions and the metal atoms or the metal ions present on the expanded graphite grains 2 included in the carbon-based material 10 have high oxygen reduction activity. The use of the carbon-based material 10 used for the positive electrode 23 can achieve high power generation performance.

When the carbon-based material 10 has the water-repellent layer on the surface, the water-repellent layer is preferably arranged on the gas phase side so that the water-repellent layer is exposed to the gas phase, and the carbon-based material 10 is preferably arranged on the electrolysis solution 21 side.

The fuel cell 20 having the configuration described above is in a closed circuit state when the electrolysis solution 21 is supplied, and when the negative electrode 22 and the positive electrode 23 are connected to the external circuit 30. An organic matter in the electrolysis solution 21 is decomposed due to the metabolism of anaerobic microorganisms, so that electrons, protons, and carbon dioxide are produced in the negative electrode 22. The produced electrons flow to the external circuit from the negative electrode 22, and the protons reach the positive electrode 23 through the electrolysis solution 21. Oxygen supplied to the positive electrode 23 from the gas phase is reduced by the reaction with the protons and electrons due to the effect of the active layers 3 of the carbon-based material 10, so as to produce water. This electrochemical reaction produces electromotive force between the positive electrode 23 and the negative electrode 22, and decomposes the organic matter in the electrolysis solution 21. Accordingly, both of the power generation and the decomposition treatment of the organic matter in the electrolysis solution 21 can be achieved.

As described above, the carbon-based material 10 according to the present embodiment having high catalytic activity, gas permeability, and water repellency can preferably be used for the gas diffusion electrode in the microbial fuel cell. The carbon-based material 10 is particularly preferable when used for the gas diffusion electrode in the microbial fuel cell because the carbon-based material is barely corroded, as compared with a metal material which is easily corroded, under the presence of microorganisms. Further, since the carbon-based material 10 can suppress time-course deterioration, the microbial fuel cell can keep high power generation performance for a long period of time.

EXAMPLES

Hereinafter, the present embodiment will be described in more detail with reference to Examples and Comparative Examples, but is not intended to be limited to these examples.

[Example 1]

A carbon-based material including an expanded graphite sheet composed of expanded graphite grains and doped with nitrogen and iron on the surfaces of the expanded graphite grains, was prepared in this example.

First, a complex solution was prepared in which an iron-protoporphyrin IX complex was dissolved in N,N-dimethylformamide. The concentration of the complex solution was adjusted to 0.1 M. The complex solution was applied to the surface of the expanded graphite sheet having a density of 0.2 g/cm$^3$ under a heating condition of 110 °C so that the iron-protoporphyrin IX complex was 0.70 mg/cm$^2$.

After the solvent was sufficiently evaporated, the expanded graphite sheet was heated at 900 °C for 90 seconds in a nitrogen atmosphere. The expanded graphite sheet was soaked in 5% of sulfuric acid for six hours and stirred to remove impurities. The expanded graphite sheet was washed and then dried sufficiently, so as to obtain the expanded graphite sheet doped with iron and nitrogen.

The obtained expanded graphite sheet and polyethylene nonwoven fabric (Tyvek (registered trademark) 1073B, available from DuPont Company) were joined together using a silicone adhesive (Shin-Etsu silicone (registered trademark) KE-3475-T, available from Shin-Etsu Chemical Co., Ltd.), so as to obtain a gas diffusion electrode.

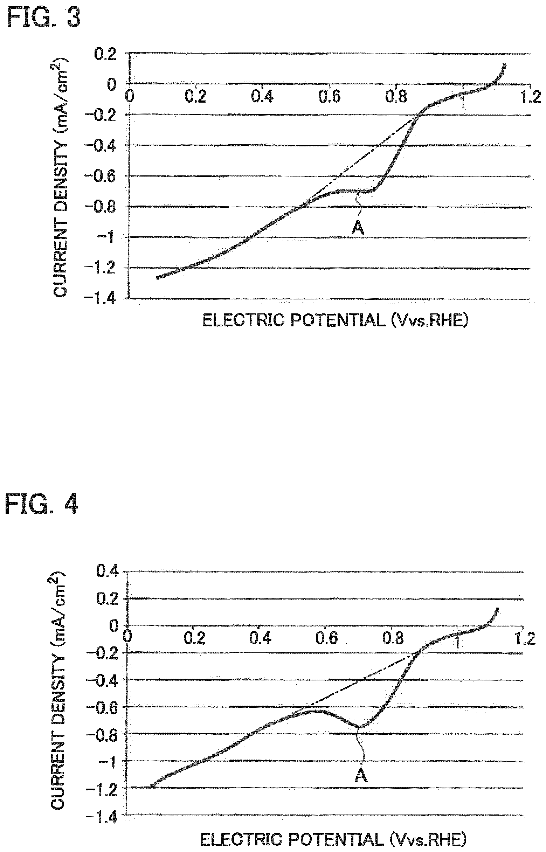

The gas diffusion electrode thus obtained was used as a working electrode so as to measure a relationship between an electric potential and a current density by linear sweep voltammetry (LSV). An electrolysis solution, which was a 1.0 M Trizma-HCl buffer solution of pH 8.0, was subjected to nitrogen bubbling so as to degas oxygen in the solution. A platinum mesh was used for a counter electrode. A sweep rate was set to 1 mV/sec. The measurement result is shown in Fig. 3.

[Example 2]

A carbon-based material including an expanded graphite sheet composed of expanded graphite grains and doped with nitrogen and cobalt on the surfaces of the expanded graphite grains, was prepared in this example.

In particular, a gas diffusion electrode of this example was prepared in the same manner as Example 1, except that a cobalt-protoporphyrin IX complex was used instead of the iron-protoporphyrin IX complex. A relationship between an electric potential and a current density in the gas diffusion electrode was measured by linear sweep voltammetry in the same manner as Example 1. The measurement result is shown in Fig. 4.

[Example 3]

A carbon-based material including an expanded graphite sheet composed of expanded graphite grains and doped with sulfur and copper on the surfaces of the expanded graphite grains, was prepared in this example.

First, a solution was prepared in which a benzyl disulfide-copper complex was dissolved in methanol at 60 °C. The concentration of the complex solution was adjusted to 0.1 M. The complex solution was applied to the surface of the expanded graphite sheet having a density of 0.2 g/cm$^3$ under a heating condition of 60 °C so that the benzyl disulfide-copper complex was 0.70 mg/cm$^2$.

After the solvent was sufficiently evaporated, the expanded graphite sheet was heated at 1050 °C for 10 minutes in a nitrogen atmosphere. The expanded graphite sheet was soaked in 5% of nitric acid at 50 °C for six hours and stirred to remove impurities. The expanded graphite sheet was washed and then dried sufficiently, so as to obtain the expanded graphite sheet doped with copper and sulfur.

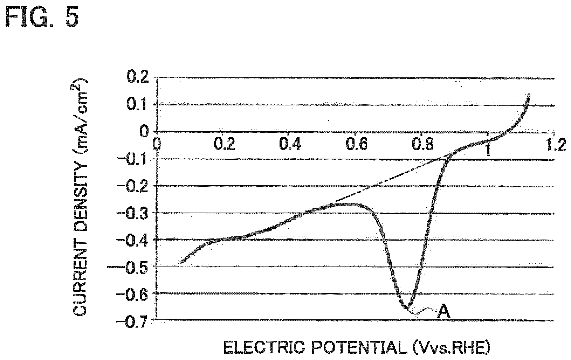

The obtained expanded graphite sheet and the polyethylene nonwoven fabric were joined together using the silicone adhesive so as to obtain a gas diffusion electrode in the same manner as Example 1. A relationship between an electric potential and a current density in the gas diffusion electrode was measured by linear sweep voltammetry in the same manner as Example 1. The measurement result is shown in Fig. 5.

[Example 4]

A carbon-based material including an expanded graphite sheet composed of expanded graphite grains and doped with nitrogen and iron on part of the expanded graphite grains present on the outermost surface of the expanded graphite sheet, was prepared in this example.

First, 2.5 g of iron chloride was dissolved in 200 mL of ethanol, and 12 mL of pentaethylenehexamine was further added thereto to prepare an iron-pentaethylenehexamine complex solution. Subsequently, the ethanol as a solvent in the complex solution was removed by a rotary evaporator, so as to lead the prepared iron-pentaethylenehexamine complex solution to have the viscosity as high as about 15,000 mPa·s. The iron-pentaethylenehexamine complex solution having high viscosity thus obtained was applied to the surface of the expanded graphite sheet having a density of 0.2 g/cm$^3$ so that the complex solution was 6 μL/cm$^2$.

After the solvent was sufficiently evaporated, the expanded graphite sheet was heated at 900 °C for 90 seconds in a nitrogen atmosphere. The expanded graphite sheet was soaked in 5% of sulfuric acid for six hours and stirred to remove impurities. The expanded graphite sheet was washed and then dried sufficiently, so as to obtain the expanded graphite sheet doped with iron and nitrogen.

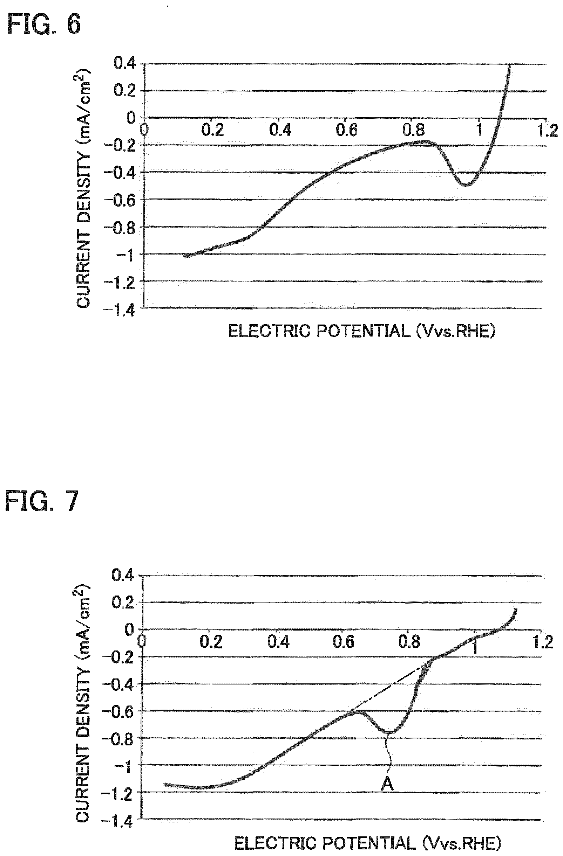

The obtained expanded graphite sheet and the polyethylene nonwoven fabric were joined together using the silicone adhesive so as to obtain a gas diffusion electrode in the same manner as Example 1. A relationship between an electric potential and a current density in the gas diffusion electrode was measured by linear sweep voltammetry in the same manner as Example 1. The measurement result is shown in Fig. 6.

[Comparative Example 1]

A carbon-based material in which a surface of a carbon paper composed of graphitized carbon fiber was doped with nitrogen and iron, was prepared in this example.

In particular, a gas diffusion electrode of this example was prepared in the same manner as Example 1, except that the carbon paper composed of graphitized carbon fiber (electrode base material for fuel cell TGP-H-120, available from Toray Industries, Inc.) was used instead of the expanded graphite sheet. A relationship between an electric potential and a current density in the gas diffusion electrode was measured by linear sweep voltammetry in the same manner as Example 1. The measurement result is shown in Fig. 7.

[Comparative Example 2]

A carbon-based material in which a surface of nonwoven fabric composed of amorphous carbon was doped with nitrogen and iron, was prepared in this example.

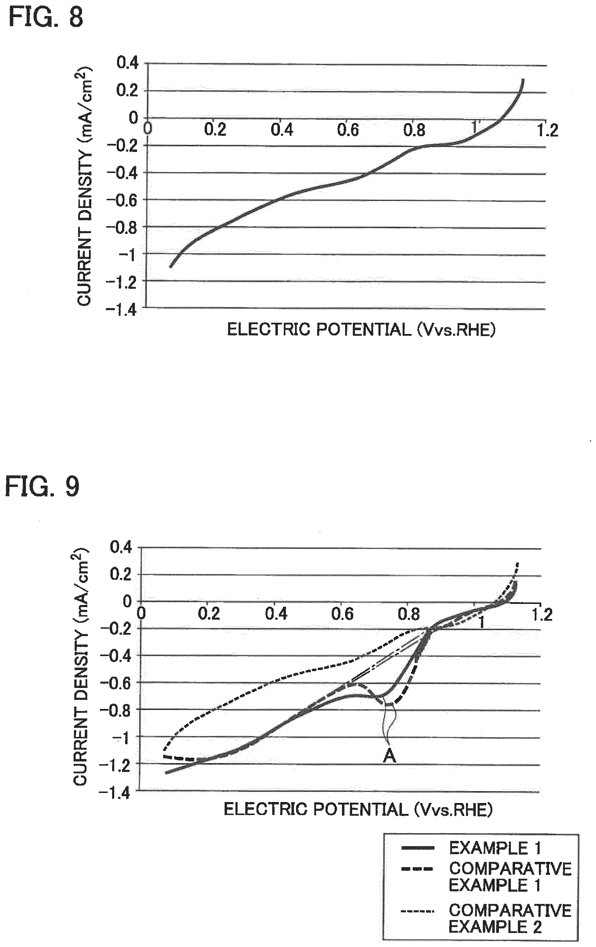

In particular, a gas diffusion electrode of this example was prepared in the same manner as Example 1, except that the nonwoven fabric composed of amorphous carbon (DONACARBO (registered trademark) Felt LFP-105, available from Osaka Gas Chemicals Co., Ltd.) was used instead of the expanded graphite sheet. A relationship between an electric potential and a current density in the gas diffusion electrode was measured by linear sweep voltammetry in the same manner as Example 1. The measurement result is shown in Fig. 8.

Fig. 9 is a graph showing the measurement results by the linear sweep voltammetry overlapping each other in the gas diffusion electrodes prepared in Example 1, Comparative Example 1, and Comparative Example 2. In each of Fig. 3 to Fig. 5 and Fig. 7 to Fig. 9, a section indicated by "A", in which the current density is decreased appears in a range of 0.6 to 0.8 V vs. RHE. However, the section A has no relationship with the evaluation of each carbon-based material, and the respective carbon-based materials are therefore evaluated in accordance with the values indicated by the dashed-dotted lines in the range of 0.6 to 0.8 V vs. RHE.

It is clearly shown in Fig. 9 that the absolute value of the current density of the electric potential in the range of 0.6 to 0.75 V vs. RHE is greater in Example 1 and Comparative Example 1 than in Comparative Example 2. The results revealed that the gas diffusion electrodes of Example 1 and Comparative Example 1 have high oxygen reduction activity because the oxygen reduction performance increases as the absolute value of the current density is greater.

Table 1 summarizes the electrical resistivity and the flexibility of each of the expanded graphite sheet used in Example 1, the carbon paper composed of graphitized carbon fiber used in Comparative Example 1, and the nonwoven fabric composed of amorphous carbon used in Comparative Example 2. The electrical resistivity obtained was measured in the plane direction of each sheet by a four-point probe method. The flexibility indicates the number of times of bending when each sheet was repeatedly bent at 180 degrees until the sheet was split up.

[Table 1]

|  | Expanded Graphite Sheet | Graphitized Carbon Fiber Paper | Amorphous Carbon Nonwoven Fabric |
|---|---|---|---|
| Electrical Resistivity (plane direction) [$\mu\Omega\cdot$m] | 7 | 47 | 200 |
| Flexibility [The number of times] | 20 | 0 | >100 |

As shown in Table 1, the expanded graphite sheet used in Example 1 has lower electrical resistivity than the carbon paper used in Comparative Example 1 and the nonwoven fabric composed of amorphous carbon used in Comparative Example 2. In addition, the expanded graphite sheet used in Example 1 has higher flexibility than the carbon paper used in Comparative Example 1. The results revealed that the carbon-based material of Example 1 using the expanded graphite sheet has the catalytic activity as high as the carbon-based material of Comparative Example 1 using the carbon paper composed of graphitized carbon fiber, and further has the flexibility that the carbon paper composed of graphitized carbon fiber cannot ensure. The carbon-based material according to the present embodiment thus can achieve high catalytic activity due to low ohmic loss, and can also achieve high durability and facilitation of an increase in size due to a high tolerance for bending.

The results also revealed that the gas diffusion electrodes of Examples 2 to 4 are preferable due to high oxygen reduction activity, as shown in Fig. 4 to Fig. 6. Examples 1 to 4 have been illustrated with the case in which the surface of the expanded graphite sheet is doped with the nonmetal atoms or the nonmetal ions and the metal atoms or the metal ions. The expanded graphite sheet which supports, on the surface, a compound including the nonmetal atoms or the nonmetal ions and the metal atoms or the metal ions can also exhibit high oxygen reduction activity, as in the case of Examples 1 to 4.

[Example 5]

First, a carbon material, in which a surface of carbon black composed of amorphous carbon was doped with nitrogen and iron, was prepared in this example. Thereafter, the carbon material was mixed and kneaded with expanded graphite grains, and then molded and pressurized. Accordingly, a carbon-based material was obtained in which the carbon material doped with nitrogen and iron was supported on the surfaces of the expanded graphite grains.

[Reference Example]

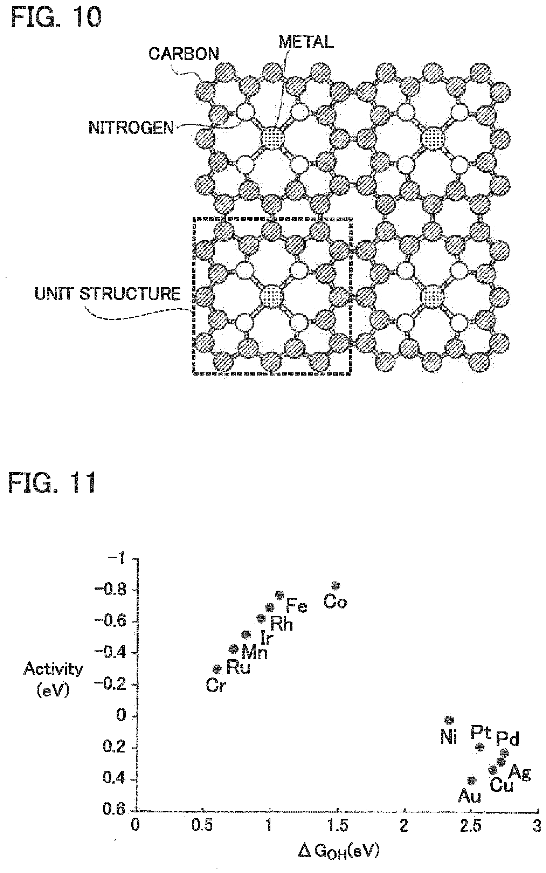

A model structure as shown in Fig. 10 was measured to calculate oxygen reduction activity by density functional theory (DFT). The calculation was executed in accordance with Federico Calle-Vallejo, Jose Ignacio Martinezac, and Jan Rossmeisl, Physical Chemistry Chemical Physics, 2011, 13, 15639-15643. The catalytic activity in the case of using nitrogen and various kinds of metal atoms can be estimated by this calculation. The calculation results are shown in Fig. 11. According to the results shown in Fig. 11, all of the metallic elements of group 8 to group 11 were presumed to effectively function as a catalyst with regard to the oxygen reduction reaction.

The entire content of Japanese Patent Application No. P2015-174466 (filed on September 4, 2015) is herein incorporated by reference.

While the present embodiment has been described above by reference to the examples and the comparative examples, the present embodiment is not intended to be limited to the descriptions thereof, and various modifications will be apparent to those skilled in the art within the scope of the present embodiment.

INDUSTRIAL APPLICABILITY

The present invention can provide a carbon-based material having high catalytic activity that is easy to manufacture with time-course deterioration suppressed. An electrode and a microbial fuel cell including the carbon-based material can keep high power-generation performance for a long period of time due to the suppression of the time-course deterioration.

REFERENCE SIGNS LIST

1       EXPANDED GRAPHITE SHEET
2       EXPANDED GRAPHITE GRAINS
10      CARBON-BASED MATERIAL
20      FUEL CELL (MICROBIAL FUEL CELL)
23      POSITIVE ELECTRODE (ELECTRODE)

**Claims**

**1.**  A carbon-based material comprising:

an expanded graphite sheet including expanded graphite grains;
nonmetal atoms or nonmetal ions of a nonmetallic element of either nitrogen or sulfur, surfaces of the expanded graphite grains being doped with the nonmetal atoms or the nonmetal ions; and

metal atoms or metal ions of at least one metallic element selected from the element group of group 8 to group 11 of a periodic table, the surfaces of the expanded graphite grains being doped with the metal atoms or the metal ions.

2. The carbon-based material according to claim 1, wherein part of the expanded graphite grains present on an outermost surface of the expanded graphite sheet is doped with the nonmetal atoms or the nonmetal ions and the metal atoms or the metal ions.

3. The carbon-based material according to claim 1, wherein the entire surfaces of the expanded graphite grains included in the expanded graphite sheet are doped with the nonmetal atoms or the nonmetal ions and the metal atoms or the metal ions.

4. A carbon-based material comprising:

an expanded graphite sheet including expanded graphite grains; and
a compound including nonmetal atoms or nonmetal ions of a nonmetallic element of either nitrogen or sulfur, and metal atoms or metal ions of at least one metallic element selected from the element group of group 8 to group 11 of a periodic table, the compound being supported on surfaces of the expanded graphite grains.

5. The carbon-based material according to claim 4, wherein the compound is supported on part of the expanded graphite grains present on an outermost surface of the expanded graphite sheet.

6. The carbon-based material according to claim 4, wherein the compound is supported on the entire surfaces of the expanded graphite grains included in the expanded graphite sheet.

7. The carbon-based material according to any one of claims 1 to 6, comprising nitrogen atoms or nitrogen ions, and iron atoms or iron ions.

8. An electrode comprising the carbon-based material according to any one of claims 1 to 7.

9. A microbial fuel cell comprising the electrode according to claim 8.

FIG. 1

FIG. 2

FIG. 3

FIG. 4

FIG. 5

ELECTRIC POTENTIAL (Vvs.RHE)

## FIG. 6

## FIG. 7

FIG. 8

FIG. 9

FIG. 10

FIG. 11

**INTERNATIONAL SEARCH REPORT**

| International application No. |
|---|
| PCT/JP2016/004430 |

A. CLASSIFICATION OF SUBJECT MATTER
*H01M4/96*(2006.01)i, *H01M8/16*(2006.01)i

According to International Patent Classification (IPC) or to both national classification and IPC

B. FIELDS SEARCHED

Minimum documentation searched (classification system followed by classification symbols)
H01M4/96, H01M8/16, C01B31/00-31/36

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/032667 A1  (SGL CARBON SE),<br>12 March 2015 (12.03.2015),<br>& US 2016/0190547 A1 | 1-9 |
| A | WO 2014/006908 A1  (Panasonic Corp.),<br>09 January 2014 (09.01.2014),<br>& US 2015/0303487 A1     & EP 2871154 A1 | 1-9 |
| A | WO 2016/063455 A1  (Panasonic Corp.),<br>28 April 2016 (28.04.2016),<br>(Family: none) | 1-9 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 December 2016 (06.12.16) | 20 December 2016 (20.12.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002184414 A
- JP P2015174466 B

**Non-patent literature cited in the description**

- Fuel cell Technology. The Institute of Electrical Engineers of Japan
- Special Research Committee for Next-Generation Fuel cell Power Generation System. Ohmsha, Ltd, August 2002
- **WATANABE, K.** *Journal of Bioscience and Bioengineering,* 2008, vol. 106, 528-536
- **FEDERICO CALLE-VALLEJO ; JOSE IGNACIO MARTINEZAC ; JAN ROSSMEISL.** *Physical Chemistry Chemical Physics,* 2011, vol. 13, 15639-15643